Europäisches Patentamt

European Patent Office

Office européen des brevets

(19)

(11) Numéro de publication : **0 146 979**
**B1**

# FASCICULE DE BREVET EUROPÉEN

(45) Date de publication du fascicule du brevet :
27.07.88

(51) Int. Cl.⁴ : **H 04 L 25/03**

(21) Numéro de dépôt : **84201629.7**

(22) Date de dépôt : **12.11.84**

(54) **Procédé et dispositif pour la détermination de la position optimale du coefficient de référence d'un égaliseur adaptatif.**

(30) Priorité : **14.11.83 FR 8318027**

(43) Date de publication de la demande :
**03.07.85 Bulletin 85/27**

(45) Mention de la délivrance du brevet :
**27.07.88 Bulletin 88/30**

(84) Etats contractants désignés :
**DE FR GB IT SE**

(56) Documents cités :
**US-A- 3 727 153**
**US-A- 3 868 576**
**US-A- 4 021 738**
**ELECTRONIC ENGINEERING, vol. 49, no. 591, avril 1977, page 9, Londres, GB; M.N.Y. SHUM: "Autopositioning of main tap for cyclic equaliser"**

(73) Titulaire : **Laboratoires d'Electronique et de Physique Appliquée L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**DE GB IT SE**

(72) Inventeur : **Sari, Hikmet**
**Société Civile S.P.I.D. 209, rue de l'Université**
**F-75007 Paris (FR)**

(74) Mandataire : **Landousy, Christian et al**
**Société Civile S.P.I.D. 209, Rue de l'Université**
**F-75007 Paris (FR)**

EP 0 146 979 B1

## 0 146 979

**Description**

La présente invention concerne un procédé et un dispositif pour la détermination de la position optimale du coefficient de référence d'un égaliseur adaptatif, s'adaptant aux variations du canal d'un système de transmission numérique et notamment pour des systèmes à hauts débits dans lesquels le canal de transmission n'est pas connu d'avance et/ou est susceptible de varier au cours du temps. Elle est donc applicable aux faisceaux hertziens numériques, à la transmission de données sur le réseau téléphonique commuté, à la transmission numérique sur câble (réseaux spéciaux de type Transpac, etc...).

Les évanouissements sélectifs par trajets multiples affectent sévèrement les capacités des systèmes radio de transmission numérique. De même, la transmission de données par câble se traduit souvent par l'apparition de distorsions et d'interférences intersymboles. Pour combattre ainsi les perturbations apparaissant sur les canaux dispersifs, il est nécessaire d'effectuer des mécanismes d'adaptation qui permettent de recouvrer à la réception les données émises. Mais pour suivre efficacement les fluctuations du canal il est nécessaire que ces mécanismes d'adaptation se fassent d'une manière automatique.

Les égaliseurs adaptatifs placés en réception de systèmes de transmission numérique, assurent la reconstitution des symboles émis par l'émetteur en déterminant des symboles estimés sur la base de critères d'adaptation et de décision.

En général les données $x_k$ issues du canal de transmission sont supposées être des données complexes, ce qui impose que les égaliseurs adaptatifs considérés traitent à la fois les parties réelle et imaginaire desdites données complexes. Bien évidemment le cas de données $x_k$ purement réelles en découle directement.

Classiquement les égaliseurs adaptatifs sont de deux types :

soit un filtre transversal non récursif où N échantillons retardés, issus des données complexes $x_k$, sont multipliés par N coefficients complexes, les N résultats ainsi obtenus étant additionnés pour définir le signal reçu ;

soit un filtre transversal récursif dans lequel, outre un filtre transversal non récursif du genre précédent, existe une branche récursive c'est-à-dire réintroduisant au milieu de l'égaliseur M données complexes apparaissant en sortie de l'égaliseur, ces M données étant multipliées respectivement par M coefficients complexes, puis additionnées aux N données de la branche non récursive, la boucle récursive possédant en outre un élément non linéaire de décision.

L'adaptation se fait en considérant un critère d'erreur et un algorithme minimisant ce critère d'erreur.

D'autre part, il est connu que dans certaines situations, il peut être utile de faire précéder l'égaliseur adaptatif d'un filtre adapté sur la réponse impulsionnelle du canal. Néanmoins dans les cas pratiques la réponse impulsionnelle du canal n'est généralement pas connue à l'avance et la solution du filtre adapté n'est pas la bonne. Lorsque l'égaliseur adaptatif n'est pas précédé d'un filtre adapté il n'est pas optimal de prendre le coefficient central de l'égaliseur comme coefficient de référence. Il est donc souhaitable de rendre adaptatif le mécanisme de sélection de la position optimale du coefficient de référence.

Pour s'adapter correctement aux variations du canal, il apparaît intéressant d'effectuer simultanément deux mécanismes d'adaptation :

un mécanisme d'adaptation des N + M coefficients ;

un mécanisme d'adaptation de la position du coefficient de référence, cette position définissant le retard de l'égaliseur adaptatif et ses performances.

L'algorithme d'adaptation utilisé pour les N + M coefficients est par exemple l'algorithme du gradient stochastique de l'erreur quadratique moyenne.

Une structure pour l'ajustement de la position du coefficient de référence dans un égaliseur adaptatif a été décrite par SHAHID U.H. QURESHI dans l'article intitulé « Adjustment of the Position of the Reference Tap of an Adaptive Equalizer » paru dans IEEE Transactions on communications, vol. COM. 21, n° 9, pp. 1046-1052, september 1973. La procédure développée par SHAHID U.H. QURESHI est d'utiliser la méthode connue du gradient stochastique de l'erreur quadratique moyenne pour déterminer la position optimale du coefficient de référence. Malheureusement, comme cela est développé dans ledit article la convergence de cette méthode vers un minimum global ne peut être garantie. En d'autres termes, la méthode peut converger vers un minimum intermédiaire qui ne correspond pas à l'adaptation optimale possible. Il y a donc un risque d'adaptation imparfaite qui diminue la fiabilité de cette méthode. D'autre part, même dans le cas le plus favorable d'une convergence vers un minimum global, le mécanisme d'adaptation fait qu'il entraîne des fluctuations de la position du coefficient de référence autour de la position d'équilibre.

Un premier but de la présente invention est ainsi de permettre d'atteindre avec certitude l'adaptation optimale de la position du coefficient de référence.

Un deuxième but de la présente invention est d'éviter les fluctuations de la position du coefficient de référence autour de la position optimale.

L'invention concerne ainsi un procédé et un dispositif pour la détermination de la position optimale du coefficient de référence d'un égaliseur adaptatif maître telle que décrit dans le préambule, dans laquelle, en fonctionnement simultané avec l'égaliseur adaptatif maître et pour des périodes d'analyse

2

consécutives :

on opère, dans un deuxième égaliseur adaptatif appelé ci-après égaliseur adaptatif esclave, une sélection de la position du coefficient de référence et une adaptation subséquente de ses coefficients, selon respectivement un algorithme de sélection et un algorithme d'adaptation ;

on compare entre eux les symboles issus des deux égaliseurs adaptatifs maître et esclave selon un critère d'erreur ;

dans le cas où le critère d'erreur indique que les résultats de l'égaliseur adaptatif esclave sont les meilleurs, on effectue un transfert de ladite position et desdits coefficients de l'égaliseur adaptatif esclave vers l'égaliseur adaptatif maître.

L'invention sera mieux comprise à l'aide de la description suivante de quelques modes de réalisation de l'invention, laquelle description étant accompagnée de dessins dans lesquels :

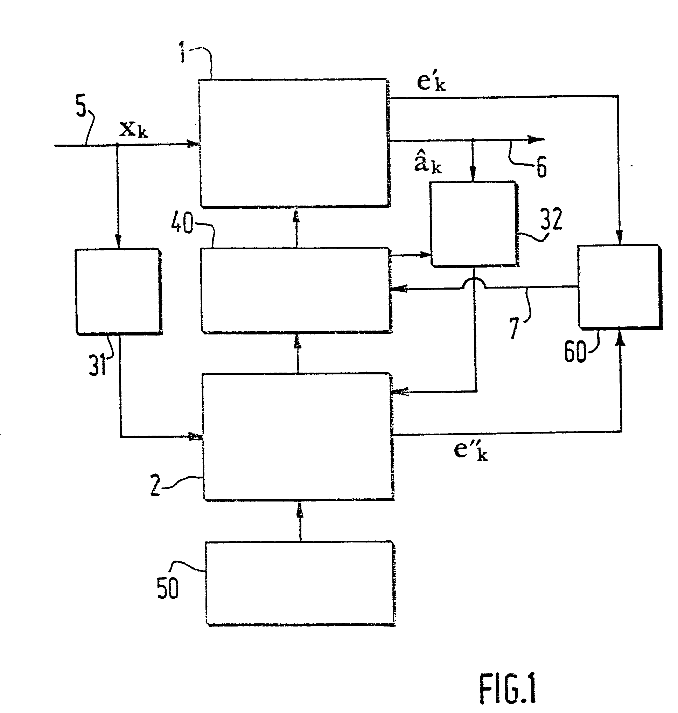

la figure 1 représente un schéma général par blocs du dispositif d'égalisation adaptative maître-esclave ;

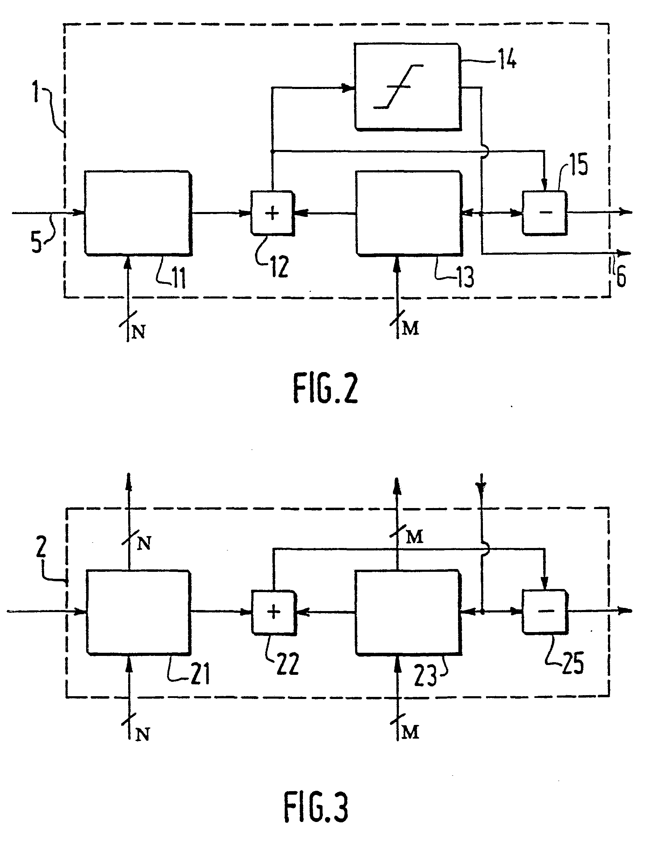

la figure 2 représente le schéma de l'égaliseur adaptatif maître ;

la figure 3 représente le schéma de l'égaliseur adaptatif esclave.

Pour la commodité de l'écriture on utilisera ci-après l'écriture E.A. maître pour égaliseur adaptatif maître et E.A. esclave pour égaliseur adaptatif esclave.

L'invention utilise ainsi un E.A. maître 1 ayant la structure connue constituée de

a) un filtre transversal 11, ayant N coefficients, recevant les données complexes $x_k$ issues du canal de transmission 5 ;

b) une boucle récursive constituée en série de :

un filtre transversal 13, ayant M coefficients traitant des symboles estimés $\hat{a}_k$ ;

un additionneur 12 recevant les symboles issus des filtres transversaux 11 et 13 et délivrant des symboles calculés $y'_k$ ;

un organe de décision 14 comparant les parties réelles et imaginaires de chaque symbole calculé $y'_k$ à une borne préalablement définie et délivrant en sortie 6 les symboles complexes estimés $\hat{a}_k$ ;

c) un soustracteur 15 délivrant une erreur $e'_k$ entre les symboles calculés $y'_k$ et les symboles estimés $\hat{a}_k$ telle que $e'_k = y'_k - \hat{a}_k$.

Selon l'algorithme du gradient stochastique les coefficients sont adaptés de la manière suivante.

A un instant k, l'E.A. maître va avoir dans le filtre transversal les coefficients :

$$C'_k = (c_0'^{(k)}, c_1'^{(k)}, ..., c_{N-1}'^{(k)})^T$$

et dans la partie récursive les coefficients :

$$D'_k = (d_1'^{(k)}, d_2'^{(k)}, ..., d_M'^{(k)})^T$$

où T indique qu'il s'agit du vecteur transposé.

L'algorithme du gradient stochastique va consister à déduire les vecteurs $C'_{k+1}$ et $D'_{k+1}$ respectivement des vecteurs précédents $C'_k$ et $D'_k$ par :

$$C'_{k+1} = C'_k - \alpha \cdot X_k^* \cdot e'_k$$

$$D'_{k+1} = D'_k - \alpha \cdot \hat{A}_{k-p}^* \cdot e'_k$$

avec la notation à l'instant k :

$$X_k = (x_k, x_{k-1}, ..., x_{k-N+1})^T$$

$$\hat{A}_{k-p} = (\hat{a}_{k-p}, \hat{a}_{k-p-1}, ..., \hat{a}_{k-p-M+1})^T$$

$$e'_k = C'^T \cdot X_k + D'^T \cdot \hat{A}_{k-p} - \hat{a}_{k-p+1} \tag{1}$$

où :

l'astérisque indique le complexe conjugué ;

la lettre p indique que la position du coefficient de référence à l'instant k est le coefficient d'ordre p ;

$\hat{a}_{k-p+1}$ est le symbole estimé à la sortie de l'E.A. maître ;

$\alpha$ est un paramètre appelé pas de l'algorithme (petite constante positive).

L'invention est remarquable en ce qu'elle utilise un E.A. esclave 2, fonctionnant avec un certain retard en parallèle avec l'E.A. maître 1 permettant de déterminer la position optimale du coefficient de référence.

Cet E.A. esclave est constitué :

a) d'un filtre transversal 21, ayant N coefficients, traitant les données complexes $x_k$ retardées ;

3

b) d'une partie récursive comprenant :

un filtre transversal 23, ayant M coefficients, traitant les symboles estimés $\hat{a}_k$ retardés, issus de l'E.A. maître ;

un additionneur 22 recevant les données issues des filtres transversaux 21 et 23 et délivrant des échantillons calculés $y''_k$ ;

c) un soustracteur 25 délivrant une erreur $e''_k$ entre les symboles calculés $y''_k$ et les symboles estimés $\hat{a}_k$, telle que $e''_k = y''_k - \hat{a}_k$.

Les données complexes $x_k$ et les symboles estimés $\hat{a}_k$ qui entrent dans l'E.A. esclave sont retardés respectivement par un premier 31 et un second 32 dispositif à retard.

L'E.A. esclave ne possède pas dans sa partie récursive propre un organe de décision comme l'E.A. maître. En effet, l'E.A. maître est l'égaliseur qui est opérationnel pour suivre les variations du canal de transmission. Les symboles estimés $\hat{a}_k$ sont les symboles émis avec une très grande probabilité. Or l'E.A. esclave, selon la procédure de sélection décrite et explicitée ci-après, va dans les premières phases de sa recherche de la position optimale délivrer des échantillons qui peuvent être assez erronés. Pour que le procédé converge rapidement, il y a lieu d'utiliser les symboles estimés $\hat{a}_k$ par l'E.A. maître et non par un autre organe de décision placé dans la partie récursive de l'E.A. esclave.

Le déroulement détaillé de la procédure de sélection est le suivant. A un instant donné l'E.A. maître 1 est en fonctionnement normal pour suivre les variations du canal de transmission 5, et un dispositif de sélection 50 impose à l'E.A. esclave 2 une position du coefficient de référence. L'E.A. esclave ayant N coefficients, la position du coefficient de référence peut, par exemple, être successivement choisie de la première à la $N^{\text{ième}}$ position. On peut également choisir de commencer par prendre pour coefficient de référence le coefficient central, et s'en écarter progressivement de part et d'autre. Ainsi avec $N = 7$ coefficients on peut choisir d'affecter à la position du coefficient de référence celle correspondant au quatrième coefficient, puis on essaie successivement le troisième et le cinquième coefficient, ou l'inverse, puis le deuxième et le sixième coefficient, ou l'inverse, et ainsi de suite. On peut également commencer avec la position du coefficient de référence en cours d'exploitation dans l'E.A. maître, et opérer des sélections successives analogues.

A chaque sélection l'E.A. esclave adapte ses $N + M$ coefficients selon un algorithme d'adaptation, par exemple l'algorithme du gradient stochastique de l'erreur quadratique moyenne. Cette méthode du gradient qui est bien connue dans les systèmes d'égalisation n'a pas de dispositif représenté sur les figures.

L'E.A. esclave utilise pour son adaptation les symboles estimés $\hat{a}_k$ de l'E.A. maître. Or lorsque l'on considère les cas extrêmes pour la position du coefficient de référence, simultanément dans l'E.A. esclave et dans l'E.A. maître, on aboutit à la situation extrême suivante : si $q = 1$ pour l'E.A. esclave et $p = N$ pour l'E.A. maître, et en considérant qu'une équation analogue à l'équation 1 s'applique à l'E.A. esclave ($q$ étant substitué à $p$ dans ce cas), on constate que l'E.A. esclave a besoin de l'échantillon $\hat{a}_k$ pour s'adapter et que d'après l'équation 1 l'E.A. maître fournit à cet instant l'échantillon $\hat{a}_{k-N+1}$. Pour tenir compte de ceci un retard tel que $L \geq N - 1$ périodes-symbole s'avère nécessaire. Le premier dispositif à retard 31 impose donc un retard choisi dans ce cas tel que $L = N - 1$ périodes-symbole.

Pour des raisons similaires, si les positions du coefficient de référence se situent pour des positions quelconques non extrêmes, il est nécessaire de mettre un retard supplémentaire représenté par le deuxième dispositif à retard 32, retard qui sera variable selon les positions respectives des deux positions des coefficients de référence.

Ce retard $L'$ se définit de la manière suivante : à l'instant $k$ le dispositif à retard 32 a en entrée l'échantillon $\hat{a}_{k-p}$ et en sortie l'échantillon $\hat{a}_{k-p-L'}$. De même la partie récursive de l'E.A. esclave a en entrée l'échantillon $A_{(k-L)-q}$. Il faut donc que les indices des échantillons arrivant sur l'E.A. esclave soient identiques, soit :

$$k - p - L' = k - L - q$$
$$\text{soit} \quad L' = L + q - p \qquad (2)$$

Le retard $L'$ est maximal lorsque $p = 1$ et $q = N$ soit $L' = L + N - 1$ et minimal pour $p = N$ et $q = 1$ soit $L' = L - N + 1$, et pour $L = N - 1$ on a :

$$0 \leq L' \leq 2(N-1). \qquad (3)$$

D'une manière analogue à celle utilisée dans l'E.A. maître, les coefficients de l'E.A. esclave vont être adaptés par la méthode du gradient stochastique.

Les coefficients du filtre transversal désignés par :

$$C''_k = (c_0''^{(k)}, c_1''^{(k)}, ...., c_{N-1}''^{(k)})^T$$

et ceux du filtre récursif désignés par :

$$D_k'' = (d_1''^{(k)}, d_2''^{(k)}, ..., d_M''^{(k)})^T$$

sont adaptés aux variations du canal de transmission par :

RESERVE 5 QG

$$C_{k+1}'' = C_k'' - \beta \cdot X_{k-N+1}^* \cdot e_k'' .$$
$$D_{k+1}'' = D_k'' - \beta \cdot \hat{A}_{k-q-N}^* \cdot e_k''$$

où $X_{k-N+1}^*$ et $\hat{A}_{k-q-N}^*$ sont définis comme dans l'E.A. maître, $\beta$ est un paramètre analogue au paramètre $\alpha$ défini précédemment, la lettre q indiquant que le coefficient de référence à l'instant k est le coefficient d'ordre q, et $e_k''$ est défini par :

$$e_k'' = C''^T \cdot X_{k-N+1} + D''^T \cdot \hat{A}_{k-q-N+1} - \hat{a}_{k-q-N+2} \qquad (4)$$

D'autres algorithmes d'adaptation des coefficients peuvent être utilisés sans s'écarter du cadre de l'invention.

L'adaptation va s'opérer durant un temps K.T représentant K fois la période-symbole T, à l'issue de laquelle les coefficients ayant convergé, les erreurs $e_k'$ issues de l'E.A. maître et $e_k''$ issues de l'E.A. esclave commencent à être exploitées.

A l'issue de la période K.T, un dispositif de calcul 60 va calculer les valeurs quadratiques moyennes relatives aux erreurs $e_k'$ et $e_k''$ sur J symboles consécutifs, telles que :

$$E(|e_k'|^2) \simeq \frac{1}{J} \sum_{j=1}^{J} |e_{k+j}'|^2$$

$$E(|e_k''|^2) \simeq \frac{1}{J} \sum_{j=1}^{J} |e_{k+j}''|^2$$

Le dispositif de calcul 60 opère également la comparaison des deux valeurs quadratiques moyennes $E(|e_k'|^2)$ et $E(|e_k''|^2)$, et délivre un signal de contrôle 7 au dispositif de transfert 40.

Si $E(|e_k'|^2) \leqslant E(|e_k''|^2)$ la position du coefficient principal de l'égaliseur maître n'est pas modifiée,

Si $E(|e_k'|^2) > E(|e_k''|^2)$ la position du coefficient de référence et les coefficients sont transférés de l'E.A. esclave vers l'E.A. maître.

A l'issue de cette période J.T le dispositif de sélection 50 va imposer à l'E.A. esclave la position suivante du coefficient de référence, selon le critère choisi, et la procédure de test et de transfert, qui vient d'être décrite se renouvelle pour chaque nouvelle position du coefficient de référence. A chaque fois qu'une nouvelle position est imposée à l'E.A. esclave, les coefficients sont réinitialisés c'est-à-dire que le coefficient choisi comme étant le coefficient de référence est mis à 1 et tous les N — 1 et M autres coefficients sont mis à 0, la sélection du coefficient de référence ne s'effectuant que sur les N coefficients. Le processus d'adaptation se déroule alors pendant la période K.T, puis le processus de calcul d'erreur pendant la période J.T à l'issue de laquelle le transfert des coefficients est éventuellement effectué.

Le dispositif de sélection peut, par exemple, être un registre à décalage.

C'est le dispositif de transfert 40 qui détermine la nouvelle valeur du retard L', selon l'équation (3) dans le cas où le retard L est fixé à L = N — 1 ou selon l'équation (2) dans le cas général, et l'impose au dispositif à retard 32, sur la base de la position optimale du coefficient de référence transférée par le dispositif de transfert 40. Le dispositif à retard (32) est constitué par exemple d'un registre à décalage de longueur L + N — 1 à entrée série et sorties parallèles, et d'un circuit démultiplexeur.

Lorsque les N positions ont ainsi été testées, et que le choix de la position optimale a éventuellement été transféré à l'E.A. maître selon le principe de l'invention, la procédure de sélection du coefficient de référence de l'E.A. esclave déjà décrite se renouvelle, en totalité ou en partie, afin de déterminer une nouvelle position optimale mieux adaptée aux caractéristiques toujours évolutives du canal de transmission.

Le déplacement de la position du coefficient de référence change le délai avec lequel les symboles transmis sont obtenus à la sortie de l'égaliseur. Si aucune précaution n'était prise, un symbole serait perdu à chaque fois que la position du coefficient de référence de l'E.A. maître serait décalée vers la gauche, et également un symbole serait répété chaque fois qu'il serait décalé vers la droite. Selon l'invention ce problème est surmonté de la manière suivante : le symbole qui serait normalement perdu lors du décalage vers la gauche peut être récupéré à la sortie de l'E.A. esclave, et la répétition du symbole peut être évitée en négligeant la première décision de l'E.A. maître après chaque décalage vers la droite de la position du coefficient de référence.

L'E.A. esclave ne fonctionne pas nécessairement à la même cadence que l'E.A. maître, mais peut opérer à une cadence plus faible, ce qui alors aboutit à une complexité de réalisation moindre. Dans ce

**0 146 979**

cas l'E.A. esclave traite un symbole émis par R (R ∈ N). La conséquence est alors un ralentissement de la convergence de l'E.A. maître, compte tenu du fait que le processus de convergence est une fonction du nombre d'itérations, donc du nombre de symboles pris en compte. De la même manière le temps pour effectuer la comparaison des deux erreurs $|e'_{k+j}|^2$ et $|e''_{k+j}|^2$ augmente dans les mêmes proportions.

**Revendications**

1. Procédé pour la détermination de la position optimale du coefficient de référence d'un égaliseur adaptatif maître, qui s'adapte aux variations du canal d'un système de transmission numérique de données en général complexes $x_k$ en modifiant ses jeux de coefficients servant à déterminer des symboles émis, caractérisé en ce que en fonctionnement simultané avec l'égaliseur adaptatif maître et pour des périodes d'analyse consécutives :
on opère, dans un égaliseur adaptatif esclave, une sélection de la position du coefficient de référence et une adaptation subséquente de ses coefficients, selon respectivement un algorithme de sélection et un algorithme d'adaptation ;
on compare entre eux des symboles issus des deux égaliseurs adaptatifs maître et esclave selon un critère d'erreur ;
dans le cas où le critère d'erreur indique que les résultats de l'égaliseur adaptatif esclave sont les meilleurs, on effectue un transfert de ladite position et desdits coefficients de l'égaliseur adaptatif esclave vers l'égaliseur adaptatif maître.

2. Procédé pour la détermination de la position optimale du coefficient de référence d'un égaliseur adaptatif maître selon la revendication 1, caractérisé en ce que l'algorithme d'adaptation des coefficients de l'égaliseur adaptatif esclave est l'algorithme du gradient stochastique de l'erreur quadratique moyenne.

3. Procédé pour la détermination de la position optimale du coefficient de référence d'un égaliseur adaptatif maître selon les revendications 1 ou 2, caractérisé en ce que l'algorithme de sélection de la position du coefficient de référence de l'égaliseur adaptatif esclave consiste à opérer des sélections successives de chaque position possible.

4. Procédé pour la détermination de la position optimale du coefficient de référence d'un égaliseur adaptatif maître selon une des revendications 1 à 3, caractérisé en ce que, pour définir et exploiter le critère d'erreur :
on détermine une erreur $e'_k$ relative à des symboles calculés $y'_k$, à partir desquels on définit dès · symboles émis comme étant des symboles estimés $â_k$ obtenus après une opération de décision, symboles issus tous de l'égaliseur adaptatif maître, l'erreur étant définie par $e'_k = y'_k — â_k$ ;
on détermine une erreur $e''_k$ entre des symboles calculés $y''_k$ de l'égaliseur adaptatif esclave et les symboles estimés $â_k$ obtenus dans l'égaliseur adaptatif maître, telle que $e''_k = y''_k — â_k$ ;
on compare les erreurs $e'_k$ et $e''_k$ en comparant leurs valeurs quadratiques moyennes respectives $E(|e'_k|^2)$ et $E(|e''_k|^2)$ ;
lorsque $E(|e''_k|^2) < E(|e'_k|^2)$ on opère un transfert de la position du coefficient de référence et des coefficients déterminés, de l'égaliseur adaptatif esclave vers l'égaliseur adaptatif maître.

5. Dispositif pour la détermination de la position optimale du coefficient de référence d'un égaliseur adaptatif maître, pour la mise en œuvre du procédé selon une des revendications 1 à 4, caractérisé en ce qu'il comprend :
un égaliseur adaptatif maître recevant les données complexes $x_k$ issues du canal de transmission, délivrant, en sortie les symboles estimés $â_k$, et l'erreur $e'_k$ entre les symboles estimés $â_k$ et les symboles calculés $y'_k$ ;
un premier et un deuxième dispositif à retard opérant respectivement sur les données complexes $x_k$ et les symboles estimés $â_k$, le premier dispositif à retard imposant un retard choisi de telle sorte que L ≥ N — 1 et le deuxième dispositif à retard imposant un retard défini par un dispositif de transfert ;
un dispositif de sélection définissant les choix successifs des positions du coefficient de référence de l'égaliseur esclave ;
un égaliseur adaptatif esclave, ayant sa position du coefficient de référence choisie par le dispositif de sélection, recevant les données complexes $x_k$ et les symboles estimés $â_k$ retardés respectivement par les premier et deuxième dispositifs à retard et délivrant l'erreur $e''_k = y''_k — â_k$ entre les symboles estimés $â_k$ de l'égaliseur adaptatif maître, retardés par le deuxième dispositif à retard, et les symboles calculés $y''_k$ de l'égaliseur adaptatif esclave ;
un dispositif de calcul recevant l'erreur $e''_k$ et l'erreur $e'_k$, déterminant et comparant entre elles leurs valeurs quadratiques moyennes, et délivrant un signal de contrôle de comparaison ;
le dispositif de transfert permettant à l'égaliseur adaptatif esclave de transmettre à l'égaliseur adaptatif maître son jeu de coefficients sous contrôle du signal de contrôle issu du dispositif de calcul, et délivrant au deuxième dispositif à retard la valeur du retard à mettre en œuvre.

6. Dispositif d'égalisation adaptative pour système de transmission numérique, caractérisé en ce qu'il utilise un dispositif pour la détermination de la position optimale du coefficient de référence d'un égaliseur adaptatif maître selon la revendication 5.

6

0 146 979

## Claims

1. A method of determining the optimum position of the reference tap of a master adaptive equalizer which adapts itself to the variations of the channel of a digital system for transmitting data $x_k$, which are generally complex, by modifying its sets of coefficients used to determine the transmitted symbols, characterized in that simultaneously with the operation of the master adaptive equalizer and for consecutive analysing periods :

a selection is made, in a slave adaptive equalizer, of the position of the reference tap and a subsequent adaptation of its coefficients in accordance with a selection algorithm and an adaptation algorithm, respectively ;

a comparison is made between the symbols supplied by the master and slave adaptive equalizers in accordance with an error criterion ; and

in the case in which the error criterion indicates that the slave adaptive equalizer provides the best results, said position and said coefficients are transferred from the slave adaptive equalizer to the master adaptive equalizer.

2. A method of determining the optimum position of the reference tap of a master adaptive equalizer as claimed in Claim 1, characterized in that the adaptation algorithm for the coefficients of the slave adaptive equalizer is the stochastic gradient algorithm for the mean-square error.

3. A method of determining the optimum position of the reference tap of a master adaptive equalizer as claimed in Claim 1 or 2, characterized in that the selection algorithm for selecting the position of the reference tap of the slave adaptive equalizer consists in effecting sequential selections of each possible position.

4. A method of determining the optimum position of the reference tap of a master adaptive equalizer as claimed in any of the Claims 1-3, characterized in that, in order to define and utilize the error criterion :

an error $e'_k$ is determined with respect to the calculated symbols $y'_k$, from which the transmitted symbols are defined as being the estimated symbols $\hat{a}_k$ obtained after a decision operation, which symbols are all produced by the master adaptive equalizer, the error being defined by $e'k = y'_k - \hat{a}_k$ ;

an error $e''_k$ is determined between the calculated symbols $y''_k$ or the slave adaptive equalizer and the estimated symbols $\hat{a}_k$ produced by the master adaptive equalizer, such as $e''_k = y''_k - \hat{a}_k$ ;

the errors $e'_k$ and $e''_k$ are compared by comparing their respective mean-square values $E(|e'_k|^2)$ and $E(|e''_k|^2)$ ;

when $E(|e''_k|^2) < E(|e'_k|^2)$, the position of the reference tap and the determined coefficients are transferred from the slave adaptive equalizer to the master adaptive equalizer.

5. An arrangement for determining the optimum position of the reference tap of a master adaptive equalizer for putting the method claimed in any of the Claims 1-4, into effect, characterized in that it comprises :

a master adaptive equalizer receiving the complex data $x_k$ from the transmission channel and supplying, from its output, the estimated symbols $\hat{a}_k$ and the error $e'_k$ between the estimated symbols $\hat{a}_k$ and the calculated symbols $y'_k$ ;

first and second delay devices acting on the complex data $x_k$ and the estimated symbols $\hat{a}_k$, respectively, the first delay device producing a delay which is chosen such that $L \geqslant N - 1$ and the second delay device producing a data, which is defined by a transfer circuit ;

a selection circuit defining the successive selections of the positions of the slave equalizer reference taps ;

a slave adaptive equalizer, the position of whose reference tap is consecutively chosen by the selection circuit, said slave equalizer receiving the delayed complex data $x_k$ and the delayed estimated symbols $\hat{a}_k$, which delays are produced by the first and second delay devices, respectively, and producing the error $e''_k = y''_k - \hat{a}_k$ between the estimated symbols $\hat{a}_k$ of the master adaptive equalizer as delayed by the second delay device, and the calculated symbols $y''_k$ of the slave adaptive equalizer ;

a calculation circuit receiving the error $e''_k$ and the error $e'_k$, determining and comparing with one another their mean-square values, and producing a comparison control signal ;

a transfer circuit by means of which the slave adaptive equalizer can transfer its set of coefficients to the master adaptive equalizer under the control of the control signal originating from the calculation circuit, and which applies the value of the delay to be put into effect to the second delay device.

6. An adaptive equalizing arrangement for digital transmission systems, characterized in that it employs an arrangement for determining the optimum position of the reference tap of a master adaptive equalizer as claimed in Claim 5.

## Patentansprüche

1. Verfahren zur Bestimmung der optimalen Lage des Bezugskoeffizienten eines adaptiven Meister-Entzerrers, der sich an die Kanaländerungen eines digitalen Datenübertragungssystems für im allgemei-

7

nen komplexe Daten $x_k$, durch Änderung seiner zum Bestimmen der übertragenen Symbole verwendeten Koeffizientensätze anpasst, dadurch gekennzeichnet, dass simultan zum Funktionieren des adaptiven Meister-Entzerrers und für aufeinanderfolgende Analysenperioden :

in einem adaptiven Sklaven-Entzerrers eine Selektion der Lage des Bezugskoeffizienten durchgeführt wird sowie eine nachfolgende Anpassung seiner Koeffizienten entsprechend einem Selektionsalgorithmus bzw. einem Anpassungsalgorithmus ;

die von adaptiven Meister- und Sklaven-Entzerrern gelieferten Symbole nach einem Fehlerkriterium miteinander verglichen werden ;

in dem Fall, wo das Fehlerkriterium angibt, das die Ergebnisse des adaptiven Sklaven-Entzerrers die besseren sind, die genannte Lage sowie genannten Koeffizienten von dem adaptiven Sklaven-Entzerrer zu dem adaptiven Meister-Entzerrer transferiert werden.

2. Verfahren zur Bestimmung der optimalen Lage des Bezugskoeffizienten eines adaptiven Meister-Entzerrers nach Anspruch 1, dadurch gekennzeichnet, dass der Anpassungsalgorithmus der Koeffizienten des adaptiven Sklaven-Entzerrers der stochastische Gradientenalgorithmus des mittleren quadratischen Fehlers ist.

3. Verfahren zur Bestimmung der optimalen Lage des Bezugskoeffizienten eines adaptiven Meister-Entzerrers nach Anspruch 1 oder 2, dadurch gekennzeichnet, dass der Selektionsalgorithmus der Lage des Bezugskoeffizienten des adaptiven Sklaven-Entzerrers aus der Durchführung aufeinanderfolgender Selektionen jeder möglichen Lage besteht.

4. Verfahren zur Bestimmung der optimalen Lage des Bezugskoeffizienten eines adaptiven Meister-Entzerrers nach einem der Ansprüche 1 bis 3, dadurch gekennzeichnet, dass zum Definieren und Benutzen des Fehlerkriteriums :

ein Fehler $e'_k$ in bezug auf berechnete Symbole $y'_k$ bestimmt wird, wobei ausgehend von diesen Symbolen übertragene Symbole definiert werden als nach einem Entscheidungsvorgang erhaltene geschätzte Symbole $â_k$, die alle von dem adaptiven Meister-Entzerrer erzeugt worden sind und wobei der Fehler durch $e'_k = y'_k - â_k$ definiert wird ;

ein Fehler $e''_k$ zwischen berechneten Symbolen $y''_k$ des adaptiven Sklaven-Entzerrers und den in dem adaptiven Meister-Entzerrer erhaltenen geschätzten Symbolen $â_k$ bestimmt wird, so dass $e''_k = y''_k - â_k$ ist ;

die Fehler $e'_k$ und $e''_k$ miteinander verglichen werden indem ihre jeweiligen mittleren quadratischen Werte $E(|e'_k|^2)$ und $E(|e''_k|^2)$ miteinander verglichen werden ;

wenn $E(|e''_k|^2) < E(|e'_k|^2)$ ist, die Lage des Bezugskoeffizienten sowie die bestimmten Koeffizienten von dem adaptiven Sklaven-Entzerrers zum adaptiven Meister-Entzerrers transferiert werden.

5. Einrichtung zur Bestimmung der optimalen Lage des Bezugskoeffizienten eines adaptiven Meister-Entzerrers zum Durchführen des Verfahrens nach einem der Ansprüche 1 bis 4, dadurch gekennzeichnet, dass diese Einrichtung die folgenden Elemente aufweist :

einen adaptiven Meister-Entzerrer, der die komplexen Daten $x_k$ aus dem Übertragungskanal erhält und der an dem Ausgang die geschätzten Symbole $â_k$ sowie den Fehler $e'_k$ zwischen den geschätzten Symbolen $â_k$ und den berechneten Symbolen $y'_k$ liefert ;

eine erste und eine zweite Verzögerungsanordnung für die komplexen Daten $x_k$ bzw. die geschätzten Symbole $â_k$, wobei die erste Verzögerungsanordnung eine derart gewählte Verzögerung L verursacht, dass $L \geq N - 1$ ist und wobei die zweite Verzögerungsanordnung eine durch eine Transferanordnung definierte Verzögerung verursacht ;

eine Selektionsanordnung, welche die jeweilige Wahl der Lagen des Bezugskoeffizienten des Sklaven-Entzerrers definiert ;

einen adaptiven Sklaven-Entzerrer, mit einer durch die Selektionsanordnung gewählten Lage des Bezugskoeffizienten, der die durch die erste und die zweite Verzögerungsanordnung verzögerten komplexen Daten $x_k$ bzw. geschätzten Symbole $â_k$ erhält und der den Fehler $e''_k = y''_k - â_k$ zwischen den geschätzten durch die zweite Verzögerungsanordnung verzögerten Symbolen $â_k$ des adaptiven Meister-Entzerrers und den berechneten Symbolen $y''_k$ des adaptiven Sklaven-Entzerrers liefert ;

eine Rechenanordnung, die den Fehler $e''_k$ und den Fehler $e'_k$ erhält, ihre mittleren quadratischen Werte bestimmt und miteinander vergleicht, und ein Vergleichssteuersignal liefert ;

die Transferanordnung, durch die der adaptive Sklaven-Entzerrer unter Ansteuerung des von der Rechenanordnung gelieferten Steuersignals den Satz von Koeffizienten zu dem adaptiven Meister-Entzerrers transferiert und der zweiten Verzögerungsanordnung den Wert der zu verwirklichenden Verzögerung liefert.

6. Adaptive Entzerrungsanordnung für ein digitales Übertragungssystem, dadurch gekennzeichnet, dass darin eine Anordnung zur Bestimmung der optimalen Lage des Bezugskoeffizienten eines adaptiven Meister-Entzerrers nach Anspruch 5 verwendet wird.

FIG.1

FIG.2

FIG.3